**Europäisches Patentamt**

**European Patent Office**

**Office européen des brevets**

(11) Veröffentlichungsnummer: **0 148 365 B2**

(12) **NEUE EUROPÄISCHE PATENTSCHRIFT**

(45) Veröffentlichungstag der neue Patentschrift:
**24.08.94**

(51) Int. Cl.5: **C08G 59/18**, C08L 63/00, C07C 277/02

(21) Anmeldenummer: **84113531.2**

(22) Anmeldetag: **09.11.84**

Die Akte enthält technische Angaben, die nach dem Eingang der Anmeldung eingereicht wurden und die nicht in dieser Patentschrift enthalten sind.

(54) **Härter für Epoxidharzmassen.**

(30) Priorität: **11.11.83 DE 3340788**

(43) Veröffentlichungstag der Anmeldung:
**17.07.85 Patentblatt 85/29**

(45) Bekanntmachung des Hinweises auf die Patenterteilung:
**29.07.87 Patentblatt 87/31**

(45) Bekanntmachung des Hinweises auf die Entsheidung über den Einspruch:
**24.08.94 Patentblatt 94/34**

(84) Benannte Vertragsstaaten:
**AT CH DE FR GB IT LI NL SE**

(56) Entgegenhaltungen:
**FR-A- 2 095 227**
**FR-A- 2 238 736**
**US-A- 3 882 064**

(73) Patentinhaber: **SKW Trostberg Aktiengesellschaft**
**Dr.-Albert-Frank-Strasse 32**
**D-83308 Trostberg (DE)**

(72) Erfinder: **von Seyerl, Joachim, Dr.**
**Seestrasse 5b**
**D-8221 Seeon (DE)**
Erfinder: **Michaud, Horst, Dr.**
**Sonnenleite 11**
**D-8223 Trostberg (DE)**

(74) Vertreter: **Weickmann, Heinrich, Dipl.-Ing. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**D-81635 München (DE)**

EP 0 148 365 B2

**Beschreibung**

Es ist bekannt. Dicyandiamid zur Härtung von Epoxidharzen zu verwenden (vgl. US-PS 26 37 715 und US-PS 33 91 113). Die Vorteile des Dicyandiamids sind vor allem die toxikologische Unbedenklichkeit und Geruchslosigkeit sowie das chemisch inerte Verhalten. so daß die Harz-Harter-Gemische eine gute Lagerstabilität aufweisen.

Die Nachteile des Dicyandiamids sind seine schlechte Löslichkeit und die nicht optimale Verteilbarkeit des dicyandiamidhaltigen Härters im Epoxidharz, was beispielsweise zu einem erhöhten Verbrauch an Härter fuhren kann. Diese erhöhte Anwendungsmenge hat jedoch wiederum zur Folge, daß es im ausgehärteten Harz zu Bereichen mit hohem Gehalt an nicht verbrauchtem Härter und somit zu Fehlstellen im Endprodukt kommen kann.

Es hat nicht an Versuchen gefehlt, dieses Problem der schlechten Verteilbarkeit von Dicyandiamid in flüssigen oder in bei höherer Temperatur schmelzenden Epoxidharzen zu verbessern, wobei je nach Anwendungsrichtung folgende Wege eingeschlagen wurden:

Verwendung eines geeigneten Lösungsmittels oder Losungsmittelgemisches zur Herstellung von Imprägnierlösungen aus Epoxidharz und Harter (vgl. DE-AS 30 26 706 und DD-AS 133 955).

Verwendung von substituierten Dicyandiamiden mit verbesserter Verteilbarkeit in Epoxidharzmassen (vgl bspw. FR-A 22 07 911).

Zusatz von feinverteiltem Siliziumdioxid zum Dicyandiamid (US-A 3 882 064).

Verwendung von Dicyandiamiddispersionen in flüssigen Epoxidharzmischungen.

Während gemäß dem ersten Weg bisher nur wenige Lösungsmittelgemische gefunden werden konnten, welche die erforderlichen Kriterien wie gute Löslichkeit oder gute Verträglichkeit mit den Epoxidharzmischungen aufweisen, ist beim zweiten Weg die Bereitstellung substituierter Dicyandiamide unwirtschaftlich, weil die Herstellung dieser Produkte hohe Betriebs- und Investitionskosten verursacht. Beim letztgenannten Weg tritt die Schwierigkeit auf, daß man möglichst feinverteiltes Dicyandiamid einsetzen muß, um zu einer guten Verteilung in pulverförmigen Epoxidharz-Härter-Mischungen oder Dispersionen in flüssigen Epoxidharzmischungen zu kommen, andererseits feinverteiltes Dicyandiamid eine ausgesprochene Neigung zum Verbacken besitzt, so daß feingemahlenes Dicyandiamid innerhalb kürzester Zeit Agglomerate bildet, die auch durch Verreiben kaum mehr zerkleinert werden können. Diese Agglomerierung von feingemahlenem Dicyandiamid führt bei Dicyandiamid-Suspensionen zur Bildung größerer Flocken, die bei den Epoxidharzmischungen zu beträchtlichen Problemen führt.

Der vorliegenden Erfindung liegt daher die Aufgabe zugrunde, einen Härter für Epoxidharzmassen auf Basis von Dicyandiamid bereitzustellen, der die genannten Nachteile des Standes der Technik nicht aufweist, der sich durch gute anwendungstechnische Eigenschaften auszeichnet und kostengünstig hergestellt werden kann.

Diese Aufgabe wird gelöst durch einen Härter, der gemahlenes Dicyandiamid mit einer Korngröbe $\geq$ 90 % $\leq$ 10 $\mu$m und 0.1 bis 30 Gew.% Siliziumdioxid und/oder ein Metalloxid der II. Haupt- oder Nebengruppe mit einer großen spezifischen Oberfläche enthält, welches dem Dicyandiamid vor dem Mahlvorgang zudosiert wurde.

Es hat sich nämlich überraschenderweise gezeigt, daß der erfindungsgemäße Härter für Epoxidharzmassen eine verbesserte Verteilbarkeit im Epoxidharz sowie eine erhöhte Lagerstabilität in den Epoxidharz-Harter-Dispersionen aufweist. Darüber hinaus bewirken die Zusätze an Siliciumdioxid und/oder Metalloxiden der II. Haupt- oder Nebengruppe eine zum Teil erhebliche Verkürzung der Gelierzeiten gegenüber normalem Dicyandiamid, was ebenfalls nicht vorhersehbar war.

Der erfindungsgemäße Epoxidharzhärter auf Basis von Dicyandiamid besteht aus einem gemahlenem Dicyandiamid mit einer Korngröße $\geq$ 90 % $\leq$ 10 $\mu$m sowie dem Diacyandiamid vor dem Mahlvorgang zudosiertem Siliciumdioxid und/oder Metalloxid der II. Haupt- oder Nebengruppe mit einer großen spezifischen Oberfläche, wobei diese mindestens 50 $m^2/g$ nach BET aufweisen sollte, um die erfindungsgemäße Wirkung zu erzielen. Als besonders vorteilhaft haben sich Siliciumdioxid-Typen erwiesen, die unter dem Zeichen Aerosil (Degussa) sowie HDK (Fa. Wacker) auf dem Markt sind.

Als Metalloxide der II. Haupt- oder Nebengruppe eignen sich besonders Magnesium-(II)-oxid, Calcium-(II)-oxid, Zink-(II)-oxid sowie Gemische davon, doch sind prinzipiell auch andere Oxide, wie z. B. diejenigen des Bariums oder des Strontiums verwendbar.

Die Menge des Siliciumdioxids bzw. des Metalloxids der II. Haupt- oder Nebengruppe betragt 0.1 bis 30 Gew.%, vorzugsweise 0.2 bis 20 Gew.% bezogen auf das Gewicht des Dicyandiamids.

Die Herstellung des Epoxidharzhärters gemäß der vorliegenden Erfindung erfolgt zweckmäßig in der Weise, daß man dem Dicyandiamid vor der Vermahlung auf die angegebene Korngröße das Siliziumdioxid und/oder das Metalloxid der II. Haupt- oder Nebengruppe kontinuierlich zudosiert, so daß die Metalloxide

EP 0 148 365 B2

dieselbe Korngrößenverteilung aufweisen wie das Dicyandiamid.

Auf diese Weise wird verhindert, daß sich das feingemahlene Dicyandiamid unmittelbar nach dem Mahlvorgang zusammenbackt und es zur Bildung unerwünschter Agglomerate kommt. Auch die Durchmischung der Komponenten kann somit in einem Schritt vollzogen werden. Das Mahlen des Dicyandiamids und des Siliciumdioxids und/oder der Metalloxide kann in den üblichen technischen Vorrichtungen, wie Sichtermühlen o. ä. problemlos durchgeführt werden, d. h. ohne Auftrennung der Bestandteile während des Sichtungsvorganges.

Der erfindungsgemäße dicyandiamidhaltige Epoxidhärter, der ein Schüttgewicht von 300 bis 500 g/l aufweist, kann optimal in festen oder flüssigen Epoxidharzen verteilt werden, wobei die Härtermenge gegenüber herkömmlichen Härtern auf Basis von Dicyandiamid verringert werden kann. Es hat sich gezeigt, daß Mengen von 3 bis 6 Gew.% bezogen auf das Epoxidequivalentgewicht ausreichend sind.

Die Härtungsreaktion mit dem Härter entsprechend der vorliegenden Erfindung kann zusätzlich mit den üblichen Härtungsbeschleunigern aktiviert werden, wie z. B. 2-Methylimidazol, substituierten Harnstoffen (Monouron, Diuron), Dimethylbenzylamin oder substituierten Methylendianilinen. Das ausgehärtete Epoxidharz weist eine deutlich verbesserte Chemikalienresistenz und Haftung gegenüber mit üblichen dicyandiamidhaltigen Härtern hergestellten Produkten auf.

Die nachfolgenden Beispiele sollen die Erfindung näher erläutern, ohne sie jedoch darauf zu beschränken.

Es werden zu Vergleichszwecken Epoxidharzhärter auf Basis von Dicyandiamid durch Vermahlen von Dicyandiamid mit folgenden Zusätzen hergestellt und miteinander verglichen:

| Härter a) | Dicyandiamid mit 1.3 Gew.% Siliciumdioxid HDK H 20 mit einer spezifischen Oberfläche von 200 m$^2$/g (Fa. Wacker) |
|---|---|
| Härter b) | Dicyandiamid mit 10.0 Gew.% Calcium-(II)-oxid |
| Härter c) | Dicyandiamid mit 0.8 Gew.% Magnesium-(II)-oxid |
| Härter d) | Dicyandiamid mit 5.0 Gew.% Zink-(II)-oxid |
| Härter e) | Dicyandiamid ohne Zusatz |

Beispiel 1: Bestimmung des mittleren Korndurchmessers mittels Röntgenelektronenmikroskopie

| Härter a) | 4-5 $\mu$m (wenig Agglomerate) |
|---|---|
| Härter b) | 4-5 $\mu$m (kaum Agglomerate) |
| Härter c) | 4-5 $\mu$m (kaum Agglomerate) |
| Härter d) | 4-5 $\mu$m (kaum Agglomerate) |
| Härter e) | 15 $\mu$m (Agglomerate bis 40 $\mu$m) |

Beispiel 2: Bestimmung der Korngröße durch Naßsiebung bei einer Siebmaschenweite von 10 $\mu$m

Zur Naßsiebung wird eine 15 % Suspension der erhaltenen Qualitäten in mit Dicyandiamid gesättigtem Ethylacetat hergestellt. Zur homogenen Vermischung wird die Suspension 5 Min. im Ultraschallbad behandelt und dann durch ein vibrierendes, vorher ausgewogenes 10 $\mu$m-Filter filtriert.

Nachdem das Filter mit weiteren 50 g Ethylacetat nachgespült wurde< wird es getrocknet und zurückgewogen. Daraus ergibt sich der Prozentgehalt an Dicyandiamid mit einem Korndurchmesser kleiner 10 $\mu$m.

| Härter a) | 99 % < 10 $\mu$m |
|---|---|
| Härter b) | 98 % < 10 $\mu$m |
| Härter c) | 98 % < 10 $\mu$m |
| Härter d) | 98 % < 10 $\mu$m |
| Härter e) | 45 % < 10 $\mu$m |

Beispiel 3 : Bestimmung der Gelierzeiten

Es werden die Gelierzeiten verschiendener erfindungsgemäßer Epoxidhärter mit Epikote 1007 bestimmt und mit herkömmlichem Dicyandiamid, mittlere Korngröße 80 $\mu$m, verglichen :

| Härter (5 Gew.% Dicyandiamid bez. auf Epikote 1007) | Gelierzeit bei 180 °C in min. |
|---|---|
| Dicyandiamid (80 $\mu$m) | 7.0 |
| Epoxidharzhärter a) | 6.0 |
| Epoxidharzhärter b) | 5.0 |
| Epoxidharzhärter c) | 6.0 |
| Epoxidharzhärter d) | 5.0 |
| Dicyandiamid (80 $\mu$m) + 0.25 % 2-Methylimidazol | 3.0 |
| Epoxidharzhärter a) + 0.25 % 2-Methylimidazol | 2.5 |

Beispiel 4 : Bestimmung der Lagerstabilität

Es werden Dispersionen von jeweils 4 % der erfindungsgemäßen härter in Epikote 828 hergestellt und mit einer Dispersion von 4 % Dicyandiamid (80 $\mu$m) innerhalb eines Zeitraumes von 4 Wochen verglichen

| Harter | Dispersion nach 4 Wochen Lagerung |
|---|---|
| Dicyandiamid (80 $\mu$m) | fast das gesamte Material abgesetzt |
| Härter a) | stabile Dispersion |
| Härter b) | stabile Dispersion |
| Härter c) | stabile Dispersion |
| Härter d) | stabile Dispersion |
| Härter e) | ca. 50 % als Flocken abgesetzt |

Beispiel 5

Es werden die in Beispiel 4 beschriebenen Dispersionen in Form einer Lackscnicht auf ein gereinigtes Stahlblech aufgebracht und bei 180 °C eine Stunde ausgehärtet. wobei folgende Beobachtungen gemacht werden :

| Dicyandiamid (80 $\mu$m) | stippiger Belag mit nicht verbrauchtem Härter, nicht vollständig ausgenartet |
|---|---|
| Härter a) | glatter, durchsichtiger Belag |
| Härter b) | glatter, weiß pigmentierter Belag |
| Härter c) | glatter, nahezu durchsichtiger Belag |
| Härter d) | glatter, leicht pigmentierter Belag |
| Härter e) | unebener, leicht stippiger Belag mit nicht verbrauchtem Härter |

## Patentansprüche

1. Härter für Epoxidharzmassen auf Basis von Dicyandiamid dadurch gekennzeichnet, daß er
   a) gemahlenes Dicyandiamid mit einer Korngröße $\geq$ 90 % $\leq$ 10 $\mu$m und
   b) 0.1 bis 30 Gew.% Siliziumdioxid und/oder ein Metalloxid der II. Haupt- oder Nebengruppe mit einer spezifischen Oberfläche nach BET von mindestens 50 $m^2$/g enthält, welches dem Dicyandiamid vor dem Mahlvorgang zudosiert wurde.

2. Härter nach Anspruch 1, dadurch gekennzeichnet, daß er 0.2 bis 20 Gew.% Siliziumdioxid und/oder ein Metalloxid der II. haupt- oder Nebengruppe bezogen auf das Gewicht des Dicyandiamids enthalt.

3. Härter nach den Ansprüchen 1 bis 2, dadurch gekennzeichnet, daß er als Metalloxide Magnesium-(II)-oxid, Calcium-(II)-oxid, Zink-(II)-oxid oder Gemische davon enthält.

4. Verfahren zur Herstellung eines Härters für Epoxidharzmassen nach den Ansprüchen 1 bis 3, dadurch gekennzeichnet, daß man das Siliziumdioxid oder/und das Metalloxid der II. Haupt- oder Nebengruppe mit dem Dicyandiamid vor dem Mahlvorgang zudosiert und dann gemeinsam auf die angegebene Korngröbe vermahlt.

**Claims**

1. A hardener, based on dicyandiamide, for epoxy resin compositions and characterised in that it contains
   a) ground dicyandiamide having a grain size $\geq$ 90% $\leq$ 10 $\mu$m
   and
   b) 0.1 to 30 wt.% of silicon dioxide and/or a metal oxide in the second main or subsidiary group with a specific BET surface area of at least 50 $m^2$/g, which was added to the dicyandiamide prior to the grinding operation.

2. A hardener according to claim 1, characterised in that it contains 0.2 to 20 wt.%, relative to the weight of dicyandiamide, of silicon dioxide and/or a metal oxide in the second main or subsidiary group.

3. A hardener according to claim 1 or 2, characterised in that the metal oxides therein are magnesium-(II) oxide, calcium-(II) oxide, zinc-(II) oxide or mixtures thereof.

4. A process for preparing a hardener for epoxy resin compositions according to claims 1 to 3, characterised in that the silicon dioxide and/or the metal oxide in the second main or subsidiary group are added to the dicyandiamide before the grinding operation and then ground together to the stated grain size.

**Revendications**

1. Durcisseur pour masses de résine époxyde à base de dicyandiamide, caractérisé en ce qu'il contient
   a) du dicyandiamide broyé ayant une granulométrie de $\geq$ 90% $\leq$ 10 $\mu$, et
   b) 0,1 à 30 % en poids de bioxyde de silicium et/ou d'un oxyde métallique du Groupe II principal ou secondaire ayant une surface spécifique selon la méthode BET d'au moins 50 $m^2$/G qui avait été ajouté au dicyandiamide avant l'opération de broyage.

2. Durcisseur suivant la revendication 1, caractérisé en ce qu'il contient 0,2 à 20 % en poids de bioxyde de silicium et/ou d'un oxyde métallique du Groupe II principal ou secondaire par rapport au poids du dicyandiamide.

3. Durcisseur suivant la revendication 1 ou 2, caractérisé en ce qu'il contient comme oxydes métalliques de l'oxyde de magnésium(II), de l'oxyde de calcium (II), de l'oxyde de zinc(II) ou des mélanges de ceux-ci.

4. Procédé de préparation d'un durcisseur pour masses de résine époxyde selon les revendications 1 à 3, caractérisé en ce qu'on ajoute le bioxyde de silicium et/ou l'oxyde métallique du groupe II principal ou secondaire au dicyandiamide avant l'opération de broyage puis en ce qu'on les broie en commun à la granulométrie indiquée.